# EUROPEAN PATENT APPLICATION

(11) **EP 2 882 258 A1**
(43) Date of publication of application: **10.06.2015**
(21) Application number: 13825383.6
(22) Date of filing: 30.07.2013
(51) Int. Cl.: H04W 88/18, H04W 4/00, G06F 3/048

(54) **GUIDE SERVICE METHOD AND DEVICE APPLIED TO SAME**

(30) Priority: 01.08.2012 KR 20120084513
(71) Applicant: Kim, Yongjin, Seoul 137-930 (KR)
(72) Inventor: CHUNG, Jay Wook, Seongnam-si Gyeonggi-do 463-802 (KR)
(74) Representative: Baroni, Matteo
(86) International application number: PCT/KR2013/006833
(87) International publication number: WO 2014/021609

(57) **Abstract**

Disclosed is a guidance service method and an apparatus thereof. That is, the method provides a terminal device that connects to a voice call with a step-based service menu through voice information, receives selection information of the terminal device based on the step-based service menu, through the voice call, and displays, in the terminal, a service screen configured based on the selection information of the terminal device that is received through the voice call, in parallel with reception of the voice information, and thereby improving understanding and convenience of the guidance service for a user.

## Description

### BACKGROUND OF THE INVENTION

### 1. Field of the invention

The present disclosure relates to a method for synchronizing voice information and a service screen provided based on selection information associated with a service menu, in association with a guidance service that provides both voice information and a service screen.

### 2. Description of the Prior Art

In general, voice guidance services refer to services that provide information that customers desire through voice, provide a service menu to a user through voice information, receive a selection of the user based on the provided service menu, and provide voice guidance corresponding to the selection.Although the voice guidance service provides a service menu in the form of voice information, the number of words that may be provided through voice is limited in terms of time. Therefore, a user fails to correctly recognize a keyword that the user should select to use the service, and may quit using the service halfway through.

In association with the above, to improve understanding and convenience for a user using voice guidance services, a method of providing a user with a service screen together with a service menu is used, instead of providing a service menu through voice information. However, in this instance, synchronization between voice information and a service screen is essential and when they are not synchronized, inaccurate guidance services may be provided to a user, which may be a drawback.

Therefore, there is desire for a method of synchronizing voice information and a service screen to provide a user with accurate service guidance in a guidance service environment where voice information and a service screen are provided together.

### SUMMARY OF THE INVENTION

An aspect of the present disclosure is to receive selection information associated with a service menu, through a voice call that supports real time, in association with a guidance service that provides both voice information and a service screen, so as to synchronize voice information and a service screen provided based on the selection information.

In order to accomplish these objects, there is provided a voice information providing apparatus. The apparatus according to a first aspect of the present disclosure includes: a voice information processing unit configured to provide a terminal device that connects to a voice call with a step-based service menu through voice information, so as to receive selection information of the terminal device based on the step-based service menu through the voice call; and an interoperation processing unit configured to enable a service screen formed based on the selection information of the terminal device received through the voice call to be displayed in the terminal device in parallel with reception of the voice information.

In particular, the service screen is configured to be formed in a screen information providing apparatus that is configured to form a service screen corresponding to the step-based service menu; and the interoperation processing unit is configured to transfer the selection information of the terminal device to the screen information providing apparatus, so that the screen information providing apparatus forms a service screen based on the selection information of the terminal device, and displays the same in the terminal device.

In particular, all service screens configured to correspond to step-based service menus are provided from the screen information providing apparatus to the terminal device; and the interoperation processing unit is configured to transfer the selection information of the terminal device to the screen information providing apparatus, so that the screen information providing apparatus displays, in the terminal, only a predetermined service screen associated with the selection information of the terminal device, from among all the service screens.

In particular, the selection information of the terminal device is configured to be selected through a user interface provided in the terminal device itself; and the voice information processing unit is configured to receive a predetermined service menu selected from the step-based service menu through the user interface, as the selection information of the terminal device.

In particular, the service screen is configured to be displayed on a display window of the terminal device, together with the user interface; and the terminal device is configured to adjust transparency of the service screen displayed on the display window, so as to display the service screen together with the user interface.

In order to accomplish these objects, there is provided an operating method of a voice information providing apparatus. The method according to a second aspect of the present disclosure includes: a voice information providing operation configured to provide a terminal device that connects to a voice call with a step-based service menu through voice information; a selection information receiving operation configured to receive selection information of the terminal device based on the step-based service menu, through the voice call; and a screen information providing operation configured to display, in the terminal, a service screen configured based on the selection information of the terminal device that is received through the voice call, in parallel with reception of the voice information.

In particular, the service screen is configured to be formed in a screen information providing apparatus configured to form a service screen corresponding to the step-based service menu; and the screen information providing operation is configured to transfer the selection information of the terminal device to the screen information providing apparatus, so that the screen information providing apparatus configures a service screen based on the selection information of the terminal device, and displays the service screen in the terminal device.

In particular, all service screens formed to correspond to step-based service menus are provided from the screen information providing apparatus to the terminal device; and the screen information providing operation is configured to transfer the selection information of the terminal device to the screen information providing apparatus, so that the screen information providing apparatus displays, in the terminal device, only a predetermined service screen associated with the selection information of the terminal device, from among all the service screens.

In particular, the selection information of the terminal device is configured to be selected through a user interface provided in the terminal device itself; and the selection information receiving operation is configured to receive the predetermined service menu selected from the step-based service menu through the user interface, as the selection information of the terminal device.

According to a guidance service method and an apparatus thereof according to the present disclosure, when a service menu provided through voice information and a corresponding service screen are provided to a terminal device in association with a voice guidance service, the terminal device receives selection information associated with a service menu through a voice call that supports real time, and synchronizes voice information and a service screen, provided based on the selection information, and thus may improve understanding and convenience of the service for a user, and improve the quality of the guidance service.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic diagram of a guidance service system according to an embodiment of the present disclosure;
FIG. 2 is a diagram illustrating a display screen of a terminal device according to an embodiment of the present disclosure;
FIG. 3 is a schematic diagram of a voice information providing apparatus according to an embodiment of the present disclosure;
FIG. 4 is a schematic flowchart illustrating operations executed in a guidance service system according to an embodiment of the present disclosure; and
FIG. 5 is a schematic flowchart illustrating operations executed in a voice information providing apparatus according to an embodiment of the present disclosure.

### DETAILED DESCRIPTION OF THE EXEMPLARY EMBODIMENTS

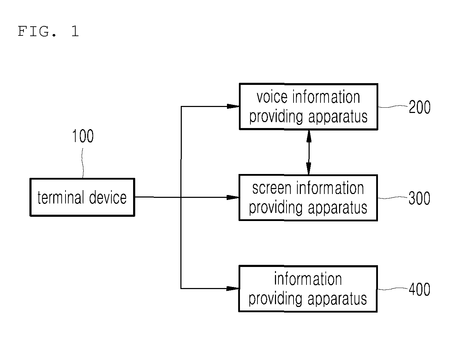

Hereinafter, an embodiment of the present disclosure will be described with reference to the accompanying drawings.FIG. 1 is a diagram of a guidance service system according to an embodiment of the present disclosure.

As illustrated in FIG. 1, a guidance service system according to an embodiment of the present disclosure includes a voice information providing apparatus 200 configured to provide voice information to a terminal device 100, and a screen information providing apparatus 300 configured to provide a service screen corresponding to voice information to the terminal device 100.

In addition, the guidance service system according to an embodiment of the present disclosure may further include an information providing server 400 configured to provide content to a connected terminal device 100, in addition to the above described configuration.

Here, the terminal device 100 refers to a user device that is capable of receiving voice information from the voice information providing apparatus 200, and simultaneously, is capable of connecting to the screen information providing apparatus 300 by executing a service application contained for reception of a service screen.

For example, the terminal device 100 corresponds to a smart phone, a personal computer (PC), a notebook, a tablet PC, and a PDA, and the like, and this may not be limited thereto and includes all devices that are capable of simultaneously connecting to a voice call and a data call.

Here, the voice call connection may refer to a network connection state for transferring voice information between the voice information providing apparatus 200 and the terminal device 100 through a voice network that secures real time and service quality (QoS Guaranteed) in a communication environment, for example, 3G or 4G.

Here, the voice call connection may refer to a network connection state for transferring a service screen between the screen information providing apparatus 300 or the information providing server 400 and the terminal device 100 through a data network of that does not secure real time and service quality (best effort) in a communication environment, for example, 3G or 4G.

In addition, the voice information providing apparatus 200 refers to a server that transfers a service menu in association with voice guidance through voice information, to the terminal device 100 that connects to a voice call, and may correspond to, for example, an Interactive Voice Response (IVR) server that provides an IVR service.

In addition, the screen information providing apparatus 300 refers to a server that transfers, to the terminal device 100 through a data call, a service screen corresponding to voice information transferred to the terminal device 100, and a service screen corresponding to the selection information of the terminal device 100 transferred through the voice information providing apparatus 200 may be displayed in the terminal device 100.

In addition, the information providing server 400 refers to a server for providing contents associated with a guidance service to the terminal device 100 through a data call, and contents associated with detailed information mapped to the service menu are provided to the terminal device 100.

An embodiment of the present disclosure employs architecture in which the voice information providing apparatus 200 provides a service menu formed of voice information to the terminal device 100, and the screen information providing apparatus 300 provides a service screen corresponding to the service menu to the terminal device 100, for providing a guidance service.

To provide an accurate guidance service to a user in cases where voice information and a service screen are provided together, synchronization between voice information and a service screen provided to the terminal device 100 is required.

However, a voice network through which the terminal device 100 and the voice information providing apparatus 200 are connected and a data network through which the terminal device 100 and the screen information providing apparatus 300 are connected are separated from one another. Further, the voice network guarantees real time as described above, but the data network does not guarantee real time.

Therefore, when selection information associated with a service menu provided to the terminal device 100 is received through the voice network and the data network, respectively, voice information and a service screen which are provided upon reception of the selection information may have difficulty synchronizing due to a different reception times.

In addition, in the case in which only the screen information providing device 300 located in the data network receives the selection information associated with the service menu and transfers the received selection information to the voice information providing apparatus 200 located in the voice network, when data network access is bad or delayed, even the voice information may be abnormally transferred.

Accordingly, an embodiment of the present disclosure provides a method of synchronizing voice information and a service screen when a service menu provided through voice information and a corresponding service screen are provided together in association with a guidance service, which will be described in detail.

The voice information providing apparatus 200 is configured to provide a service menu for a guidance service to the terminal device 100 that connects to a voice call.

In particular, the voice information providing apparatus 200 determines a service request from the terminal device 100 that connects to a voice call, and provides an initial step service menu for a guidance service to the corresponding terminal device 100 through voice information.

In addition, the voice information providing apparatus 200 transfers, to the screen information providing apparatus 300, the service request received from the terminal device 100, so as to request provision of a service screen, so that a service screen associated with the initial step service menu provided to the terminal device 100 is provided.

Accordingly, the screen information providing apparatus 300 provides a service screen to the terminal device 100.

In particular, when the service request from the terminal device 100 is transferred from the voice information providing apparatus 200, the screen information providing apparatus 300 transfers, to the terminal device, a driving message used for executing a service application contained for displaying a service screen on the terminal device 100, and draws access to the initial step service menu.

In connection with the above, the terminal device 100 executes the contained service application upon reception of the driving message from the screen information providing apparatus 300 so as to connect to the screen information providing apparatus 300, and obtains a service screen corresponding to the initial step service menu from the screen information providing apparatus 300.

In this instance, the screen information providing apparatus 300 provides the terminal device 100 that establishes connection through execution of the service application with all service screens associated with step-based service menu trees, including the service screen corresponding to the initial step service menu. Subsequently, the terminal device 100 displays a service screen required for each step, through controlling display of the terminal device 100.

Alternatively, the screen information providing apparatus 300 provides only the service screen corresponding to the initial step service menu. Subsequently, every time the selection information of the terminal device 100 in association with a service menu of each step is transferred from the voice information providing apparatus 200, the screen information providing apparatus 300 may separately provide a service screen corresponding to the selection information to the terminal device 100.

Accordingly, the terminal device 100 receives a service menu formed of voice information, and displays a service screen corresponding to the service menu.

In particular, the terminal device 100 receives the initial step service menu formed of voice information from the voice information providing apparatus 200 in response to the service request through the voice information providing apparatus 200, and simultaneously, executes a service application upon reception of a driving message from the screen information providing apparatus 300, obtains the initial step service menu from the screen information providing apparatus 300, and displays the same.

The terminal device 100 may drive the service application by itself by recognizing a calling line input with respect to the voice information providing apparatus 200 when a voice call with respect to the voice information providing apparatus 200 is connected, in addition to the above described scheme of executing a service application based on a driving message received from the screen information providing apparatus 300.

In addition, the terminal device 100 is configured to transfer service menu-based selection information to the voice information providing apparatus 200.

In particular, the terminal device 100 determines selection associated with a selection menu, of a user who recognizes the service menu by listening to the voice information received from the voice information providing apparatus 200, and simultaneously, recognizes the corresponding service menu through a service screen, and transfers the corresponding selection information to the voice information providing apparatus 200 so as to request a lower step service menu.

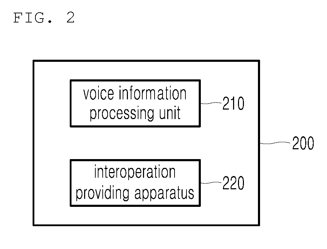

In this instance, the terminal device 100 calls and displays a user interface (for example, a keypad) provided in the terminal device 100 itself in association with a voice call, in addition to the service screen corresponding to the initial step service menu, as illustrated in FIG. 2A, and may transfer, to the voice information providing apparatus 200 through a voice call, the selection information associated with the service menu, input through the user interface.

That is, to not use the data network that does not guarantee real time when transferring the selection information, the terminal device 100 does not provide a user interface for user selection in a service screen and simultaneously makes the corresponding service screen semitransparent, so that the user interface (keypad) provided in association with the voice call that guarantees real time is exposed and thus, user selection is received through the same and this may be transferred through a voice call.

In addition, the voice information providing apparatus 200 is configured to provide a service menu corresponding to the selection information of the terminal device 100.

In particular, when the selection information associated with the initial step service menu is received from the terminal device 100, the voice information providing apparatus 200 provides a lower step service menu corresponding to the corresponding selection information through voice information.

In addition, the voice information providing apparatus 200 transfers the selection information received from the terminal device 100, to the screen information providing apparatus 300, so as to request provision of a service screen associated with the lower step service menu provided through the voice information.

Accordingly, the screen information providing apparatus 300 provides the service screen to the terminal device 100.

In particular, when the selection information associated with the service menu of the terminal device 100 is transferred from the voice information providing apparatus 200, the screen information providing apparatus 300 controls display of the terminal device 100 so as to display, in the terminal device 100, the service screen corresponding to the lower step service menu provided through the voice information.

Accordingly, the terminal device 100 receives the service menu formed of voice information, and displays the service screen corresponding to the service menu.

In particular, the terminal device 100 receives the lower step service menu formed of voice information corresponding to the selection information, from the voice information providing apparatus 200, and simultaneously, displays the service screen corresponding to the lower step service menu according to a display control from the screen information providing apparatus 300.

In addition, the terminal device 100 is configured to transfer service menu-based selection information to the voice information providing apparatus 200.

In particular, the terminal device 100 determines selection associated with a service menu, of a user who recognizes the service menu by listening to the voice information received from the voice information providing apparatus 200, and simultaneously, recognizes the corresponding service menu through a service screen, and transfers the corresponding selection information to the voice information providing apparatus 200 so as to request contents corresponding to a selection result.

In this instance, the terminal device 100 calls and displays a user interface (for example, a keypad) provided in the terminal device 100 itself in association with a voice call, as illustrated in FIG. 2B, and may transfer, to the voice information providing apparatus 200 through a voice call, selection information associated with the service menu, input through the user interface.

In addition, the voice information providing apparatus 200 is configured to provide a selection result corresponding to the selection information of the terminal device 100.

In particular, when the selection information associated with the lower step service menu is received from the terminal device 100, the voice information providing apparatus 200 provides detailed guidance corresponding to the corresponding selection result through voice information.

In addition, the voice information providing apparatus 200 transfers the selection information received from the terminal device 100, to the screen information providing apparatus 300, so as to request provision of a service screen associated with the selection result provided through the voice information.

Accordingly, the screen information providing apparatus 300 provides the service screen to the terminal device 100.

In particular, when the selection information associated with the lower step service menu of the terminal device 100 is transferred from the voice information providing device 200, the screen information providing apparatus 300 executes a display control to display a service screen for detailed guidance in the terminal device 100, or transfers an access address of the information providing server 400 that provides a service page in which related contents are disclosed, so as to draw access to the corresponding service page.

Accordingly, the terminal device 100 receives a service menu formed of voice information, and simultaneously, displays a service screen or accesses a predetermined service page.

In particular, the terminal device 100 receives the detailed guidance formed of voice information corresponding to the selection information, from the voice information providing apparatus 200, and simultaneously, displays the service screen corresponding to the detailed guidance according to a display control from the screen information providing apparatus 300, as illustrated in FIG. 2C.

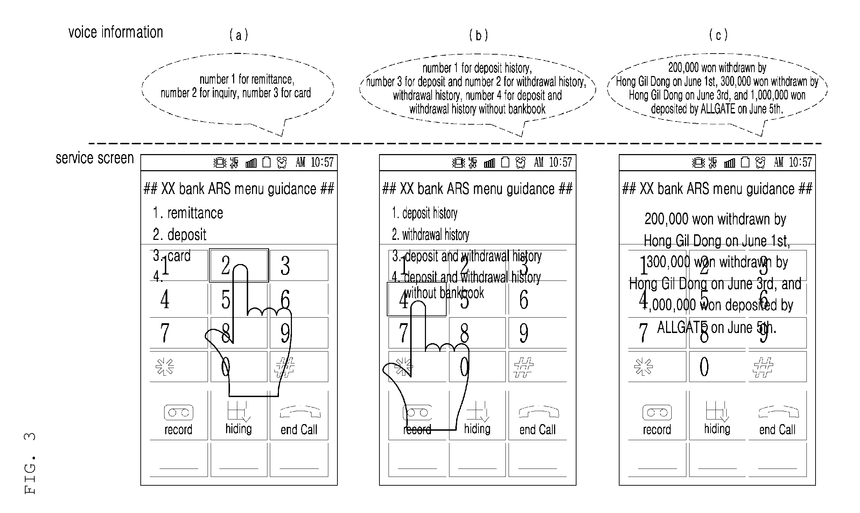

When the access address of the information providing server 400 is received from the screen information providing apparatus 300 is received, the terminal device 100 connects to the information providing apparatus 400 based on the received access address and determines contents associated with the detailed guidance provided by the information providing apparatus 400.Hereinafter, the configuration of the voice information providing apparatus 200 according to an embodiment of the present disclosure will be described with reference to FIG. 3.

That is, the voice information providing device 200 includes the voice information processing unit 210 configured to provide a service menu through voice information and an interoperation processing unit 220 configured to display a service screen corresponding to the voice information in the terminal device 100.

Here, the voice information processing unit 210 and the interoperation processing unit 220 may be configured as a software module type that is executed by a program used for operating a server.

The voice information processing unit 210 is configured to provide a service menu for a guidance service to the terminal device 100 that connects to a voice call.

In particular, the voice information processing unit 210 determines a service request of the terminal device 100 that connects to a voice call, and provides an initial step service menu for a guidance service to the corresponding terminal device 100 through voice information.

In connection with the above, the interoperation processing unit 200 is configured to transfer a service screen corresponding to the service menu.

In particular, to provide a service screen associated with the initial step service menu provided to the terminal device 100, the interoperation processing unit 200 transfers, to the screen information providing apparatus 300, the service request received from the terminal device 100, and enables the screen information providing apparatus 300 to provide the service screen corresponding to the initial step service menu to the terminal device 100.

In particular, the terminal device 100 receives the initial step service menu formed of voice information from the voice information providing apparatus 200 in response to the service request through the voice information providing apparatus 200, and simultaneously, executes a service application upon reception of a driving message from the screen information providing apparatus 300, obtains the initial step service menu from the screen information providing apparatus 300, and displays the same.

In particular, the terminal device 100 determines selection associated with a service menu, of a user who recognizes the service menu by listening to the voice information received from the voice information providing apparatus 200, and simultaneously, recognizes the corresponding service menu through a service screen, and transfers the corresponding selection information to the voice information providing apparatus 200 so as to request a lower step service menu.

In addition, the voice information processing unit 210 is configured to provide a service menu corresponding to the selection information of the terminal device 100.

In particular, when the selection information associated with the initial step service menu is received from the terminal device 100 through a voice call, the voice information processing unit 210 provides a lower step service menu corresponding to the corresponding selection information through voice information.

In connection with the above, the interoperation processing unit 220 is configured to transfer a service screen corresponding to the service menu.

In particular, the interoperation processing unit 220 transfers the selection information received from the terminal device 100 to the screen information providing apparatus 300, to enable the screen information providing apparatus 300 to provide the terminal device 100 with the service screen associated with the lower step service menu provided through voice information.

Accordingly, the terminal device 100 receives the lower step service menu formed of voice information corresponding to the selection information, from the voice information providing apparatus 200, and simultaneously, displays the service screen corresponding to the lower step service menu according to a display control from the screen information providing apparatus 300.

In addition, the terminal device 100 determines selection associated with the service menu, of a user who recognizes the lower step service menu by listening to the voice information received from the voice information providing apparatus 200, and simultaneously, recognizes the corresponding service menu through the service screen, and transfers the corresponding selection information to the voice information providing apparatus 200 so as to request contents corresponding to a selection result.

In addition, the voice information processing unit 210 is configured to provide the selection result corresponding to the selection information of the terminal device 100.

In particular, when the selection information associated with the lower step service menu is received from the terminal device 100, the voice information processing unit 210 provides detailed guidance corresponding to the corresponding selection result through voice information.

In connection with the above, the interoperation processing unit 220 is configured to transfer a service screen corresponding to the selection result.

In particular, the interoperation processing unit 220 transfers the selection information received from the terminal device 100 to the screen information providing apparatus 300, to enable the screen information providing apparatus 300 to provide the terminal device 100 with the service screen associated with the selection result provided through voice information.

Accordingly, the terminal device 100 receives the detailed guidance formed of voice information corresponding to the selection information, from the voice information providing apparatus 200, and simultaneously, displays the service screen corresponding to the detailed guidance according to a display control from the screen information providing apparatus 300. When an access address of the information providing server 400 is received from the screen information providing apparatus 300, the terminal device 100 connects to the information providing apparatus 400 based on the received access address and determines contents associated with the detailed guidance provided by the information providing apparatus 400. As described above, according to a guidance service system according to an embodiment of the present disclosure, by applying a scheme of receiving selection information associated with a service menu through a voice call that guarantees real time, and providing voice information and a service screen together based on the selection information, the voice information and the service screen are synchronized, and thus understanding and convenience of the voice guidance service for a user may be improved and the quality of the voice guidance service may be improved.

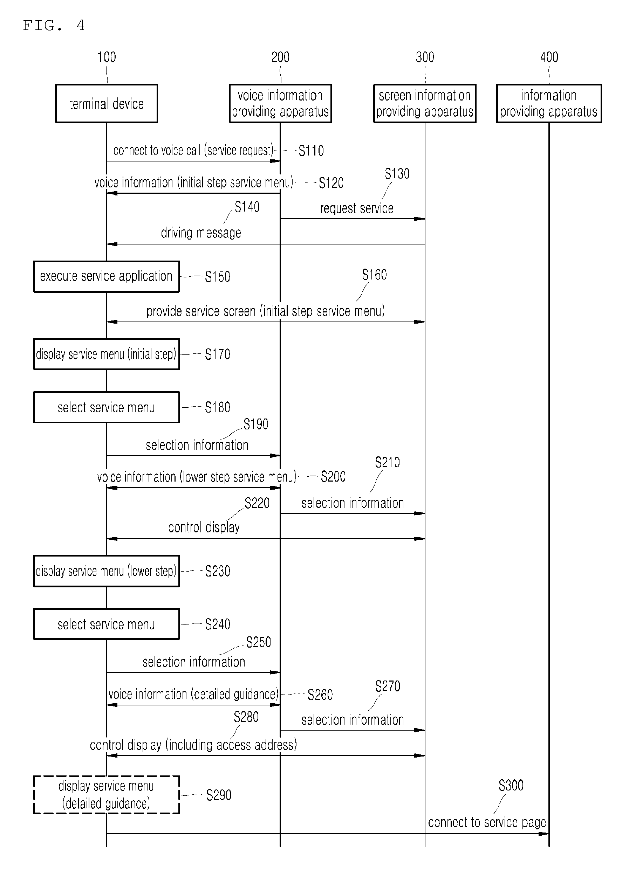

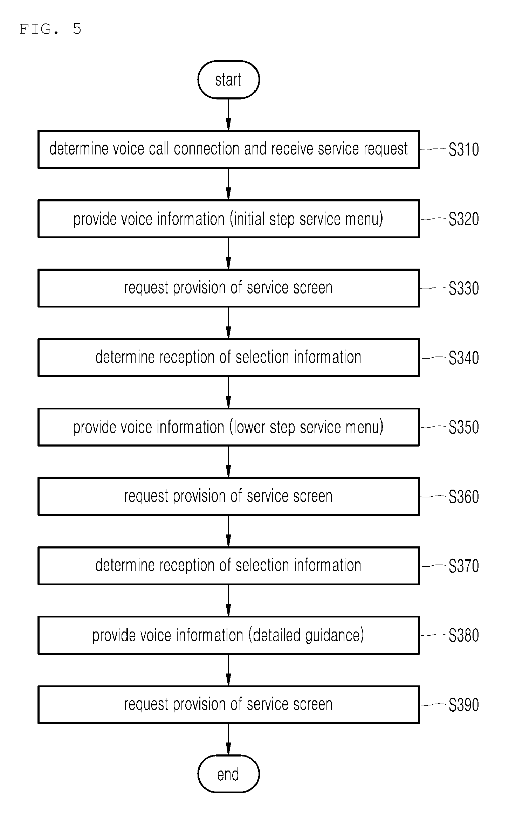

Hereinafter, referring to FIGs. 4 and 5, a guidance service method according to an embodiment of the present disclosure will be described.

Here, the configurations identical to those illustrated in FIGs. 1 to 3 are assigned the same corresponding reference numerals for the convenience of description.

First, the flow of operations executed in a guidance service system according to an embodiment of the present disclosure will be described with reference to FIG. 4.

First, the voice information providing apparatus 200 determines a service request from the terminal device 100 that connects to a voice call, and provides an initial step service menu for a guidance service to the corresponding terminal device 100 through voice information, in operations S110 and S120.

In addition, the voice information providing apparatus 200 transfers, to the screen information providing apparatus 300, the service request received from the terminal device 100, and requests provision of a service screen, so as to provide the service screen associated with the initial step service menu provided to the terminal device 100, in operation S130. Accordingly, when the service request from the terminal device 100 is transferred from the voice information providing apparatus 200, the screen information providing apparatus 300 transfers, to the terminal device 100, a driving message used for executing a service application contained for displaying a service screen on the terminal device 100, and draws access to the initial step service menu, in operation S140.

Accordingly, the terminal device 100 executes the contained service application upon reception of the driving message from the screen information providing apparatus 300 so as to connect to the screen information providing apparatus 300, and obtains a service screen corresponding to the initial step service menu from the screen information providing apparatus 300, in operations S150 and S160.

Subsequently, through executing the service application upon reception of the driving message from the screen information providing apparatus 300 while at the same time receiving the initial step service menu formed of voice information, the terminal device 100 obtains the initial step service menu from the screen information providing apparatus 300 and displays the same, in operation S170.

Next, the terminal device 100 determines selection associated with the service menu, of a user who recognizes the corresponding service menu by listening to the voice information received from the voice information providing apparatus 200, and simultaneously, recognizes the corresponding service menu through the service screen, and transfers the corresponding selection information to the voice information providing apparatus 200 so as to request a lower step service mane, in operations S180 and S190.

Accordingly, when the selection information associated with the initial step service menu is received from the terminal device 100, the voice information providing apparatus 200 provides a lower step service menu corresponding to the corresponding selection information through voice information, in operation S200.

In addition, the voice information providing apparatus 200 transfers the selection information received from the terminal device 100, to the screen information providing apparatus 300, so as to request provision of a service screen associated with the lower step service menu provided through the voice information, in operation S210.

Accordingly, when the selection information associated with the service menu of the terminal device 100 is transferred from the voice information providing apparatus 200, the screen information providing apparatus 300 controls display of the terminal device 100 so as to display the service screen corresponding to the lower step service menu provided through the voice information, in the terminal device 100, in operation S220.

Accordingly, the terminal device 100 receives the lower step service menu formed of voice information corresponding to the selection information, from the voice information providing apparatus 200, and simultaneously, displays the service screen corresponding to the lower step service menu according to a display control from the screen information providing apparatus 300, in operation S230.

Further, the terminal device 100 determines selection associated with the service menu, of a user who recognizes the lower step service menu by listening to the voice information received from the voice information providing apparatus 200, and simultaneously, recognizes the corresponding service menu through the service screen, and transfers the corresponding selection information to the voice information providing apparatus 200 so as to request contents corresponding to a selection result, in operations S240 and S250.

Accordingly, when the selection information associated with the lower step service menu is received from the terminal device 100, the voice information providing apparatus 200 provides detailed guidance corresponding to the corresponding selection result through voice information, in operation S260.

In addition, the voice information providing apparatus 200 transfers the selection information received from the terminal device 100, to the screen information providing apparatus 300, so as to request provision of a service screen associated with the selection result provided through the voice information, in operation S270.

Accordingly, when selection information associated with the lower step service menu of the terminal device 100 is transferred from the voice information providing device 200, the screen information providing apparatus 300 executes a display control to display a service screen for detailed guidance in the terminal device 100, or transfers an access address of the information providing server 400 that provides a service page in which related contents are disclosed, so as to draw access to the corresponding service page, in operation S280.

In particular, the terminal device 100 receives the detailed guidance formed of voice information corresponding to the selection information, from the voice information providing apparatus 200, and simultaneously, displays the service screen corresponding to the detailed guidance according to a display control from the screen information providing apparatus 300, as illustrated in FIG. 2C, in operation S290.

When the access address of the information providing server 400 is received from the screen information providing apparatus 300, the terminal device 100 connects to the information providing apparatus 400 based on the received access address and determines contents associated with the detailed guidance provided by the information providing apparatus 400, in operation S300.

Hereinafter, an operating method of the voice information providing apparatus 200 according to an embodiment of the present disclosure will be described with reference to FIG. 5.

First, the voice information providing apparatus 210 determines a service request from the terminal device 100 that connects to a voice call, and provides an initial step service menu for a guidance service to the corresponding terminal device 100 through voice information in operations S310 and S320.

In connection with the above, the interoperation processing unit 200 transfers, to the screen information providing apparatus 300, the service request received from the terminal device 100, so as to provide a service screen associated with the initial step service menu provided to the terminal device 100, and thus, enables the screen information providing apparatus 300 to provide the service screen corresponding to the initial step service menu to the terminal device, in operation S330.

Accordingly, the terminal device 100 receives the initial step service menu formed of voice information from the voice information providing apparatus 200 in response to the service request through the voice information providing apparatus 200, and simultaneously, executes a service application upon reception of a driving message from the screen information providing apparatus 300, obtains the initial step service menu from the screen information providing apparatus 300, and displays the same.

In addition, the terminal device 100 determines selection associated with the service menu, of a user who recognizes the service menu by listening to the voice information received from the voice information providing apparatus 200, and simultaneously, recognizes the corresponding service menu through a service screen, and transfers the corresponding selection information to the voice information providing apparatus 200 so as to request a lower step service menu.

When the selection information associated with the initial step service menu is received from the terminal device 100 through a voice call, the voice information processing unit 210 provides a lower step service menu corresponding to the corresponding selection information through voice information, in operations S340 and 350.

In connection with the above, the interoperation processing unit 220 transfers the selection information received from the terminal device 100 to the screen information providing apparatus 300, to enable the screen information providing apparatus 300 to provide the terminal device 100 with a service screen associated with the lower step service menu provided through voice information, in operation S360.

Accordingly, the terminal device 100 receives the lower step service menu formed of voice information corresponding to the selection information, from the voice information providing apparatus 200, and simultaneously, displays the service screen corresponding to the lower step service menu according to a display control from the screen information providing apparatus 300.

In addition, the terminal device 100 determines selection associated with the service menu, of a user who recognizes the lower step service menu by listening to the voice information received from the voice information providing apparatus 200, and simultaneously, recognizes the corresponding service menu through the service screen, and transfers the corresponding selection information to the voice information providing apparatus 200 so as to request contents corresponding to a selection result.

Subsequently, when the selection information associated with the lower step service menu is received from the terminal device 100, the voice information processing unit 210 provides detailed guidance corresponding to the corresponding selection result through voice information, in operations S370 and S380.

In connection with the above, the interoperation processing unit 220 transfers the selection information received from the terminal device 100 to the screen information providing apparatus 300, to enable the screen information providing apparatus 300 to provide the terminal device 100 with the service screen associated with the lower step service menu provided through voice information, in operation S390.

Accordingly, the terminal device 100 receives detailed guidance formed of voice information corresponding to the selection information, from the voice information providing apparatus 200, and simultaneously, displays a service screen corresponding to the detailed guidance according to a display control from the screen information providing apparatus 300.

When an access address of the information providing server 400 is received from the screen information providing apparatus 300, the terminal device 100 connects to the information providing apparatus 400 based on the received access address and determines contents associated with the detailed guidance provided by the information providing apparatus 400. As described above, according to a guidance service method according to an embodiment of the present disclosure, by applying a scheme of receiving selection information associated with a service menu through a voice call that guarantees real time, and providing voice information and a service screen together based on the selection information, the voice information and the service screen are synchronized, and thus understanding and convenience of the voice guidance service for a user may be improved and the quality of the voice guidance service is improved.

Meanwhile, the method or algorithm steps described in connection with the embodiments disclosed herein may be directly implemented by hardware, a software module executed by a processor, or a combination thereof. The software module may be located at a Random Access Memory (RAM), a flash memory, a Read Only Memory (ROM), an Erasable Programmable ROM (EPROM), an Electrically EPROM (EEPROM), registers, a hard disc, a removable disc, a Compact Disc (CD)-ROM, or a technically known storage medium having another random type. Examples of the storage medium may be connected with a processor, and accordingly, the process may read information from the storage medium and record information in the storage medium. Alternatively, the storage medium may be integrated into the processor. The processor and the storage medium may be included within an Application Specific Integrated Circuit (ASIC). The ASIC may be included within a user terminal. Alternatively, the processor and the storage medium may be included within the user terminal as individual components.

Although the present disclosure has been described in detail with reference to exemplary embodiments, the present disclosure is not limited thereto and it is apparent to those skilled in the art that various modifications and changes can be made thereto without departing from the scope of the present disclosure.

### Industrial applicability

A guidance service method and an apparatus thereof according to an embodiment of the present disclosure passes a limit of an existing technology in that selection information associated with a service menu is received through a voice call that supports real time, and voice information and a service screen provided based on the selection information are synchronized when a service menu provided through voice information and a corresponding service screen are provided to a terminal device in association with a guidance service. Accordingly, the present disclosure has an industrial applicability since it has a sufficiently high probability of being available on the market and can be substantially embodied.

## Claims

1. A voice information providing apparatus, the apparatus comprising:
a voice information processing unit configured to provide a terminal device that connects to a voice call with a step-based service menu through voice information, so as to receive selection information of the terminal device based on the step-based service menu through the voice call; and
an interoperation processing unit configured to enable a service screen formed based on the selection information of the terminal device, which is received through the voice call, to be displayed in the terminal device in parallel with reception of the voice information.

2. The apparatus of claim 1, wherein the service screen is configured to be formed in a screen information providing apparatus that is configured to form a service screen corresponding to the step-based service menu; and
the interoperation processing unit is configured to transfer the selection information of the terminal device to the screen information providing apparatus, so that the screen information providing apparatus forms a service screen based on the selection information of the terminal device, and makes the service screen based on the selection information of the terminal device to be displayed in the terminal device.

3. The voice information providing apparatus of claim 2, wherein all service screens configured to correspond to step-based service menus are provided from the screen information providing apparatus to the terminal device; and
the interoperation processing unit is configured to transfer the selection information of the terminal device to the screen information providing apparatus, so that the screen information providing apparatus makes only a predetermined service screen associated with the selection information of the terminal device, from among all the service screens to be displayed in the terminal device.

4. The apparatus of claim 1, wherein the selection information of the terminal device is configured to be selected through a user interface provided in the terminal device itself; and the voice information processing unit is configured to receive a predetermined service menu selected from the step-based service menu through the user interface, as the selection information of the terminal device.

5. The voice information providing apparatus of claim 4, wherein the service screen is configured to be displayed on a display window of the terminal device, together with the user interface; and
the terminal device is configured to adjust transparency of the service screen displayed on the display window, so as to display the service screen together with the user interface.

6. An operating method of a voice information providing apparatus, the method comprising:
a voice information providing operation configured to provide a terminal device that connects to a voice call with a step-based service menu through voice information;
a selection information receiving operation configured to receive selection information of the terminal device based on the step-based service menu, through the voice call; and
a screen information providing operation configured to make a service screen configured based on the selection information of the terminal device, which is received through the voice call, to be displayed in the terminal device in parallel with reception of the voice information.

7. The method of claim 6, wherein the service screen is configured to be formed in a screen information providing apparatus configured to form a service screen corresponding to the step-based service menu; and
the screen information providing operation is configured to transfer the selection information of the terminal device to the screen information providing apparatus, so that the screen information providing apparatus configures a service screen based on the selection information of the terminal device, and makes the service screen to be displayed in the terminal device.

8. The method of claim 7, wherein all service screens formed to correspond to step-based service menus are provided from the screen information providing apparatus to the terminal device; and
the screen information providing operation is configured to transfer the selection information of the terminal device to the screen information providing apparatus, so that the screen information providing apparatus makes only a predetermined service screen associated with the selection information of the terminal device, from among all the service screens to be displayed in the terminal device.

9. The method of claim 1, wherein the selection information of the terminal device is configured to be selected through a user interface provided in the terminal device itself; and the selection information receiving operation is configured to receive the predetermined service menu selected from the step-based service menu through the user interface, as the selection information of the terminal device.
